# EUROPÄISCHE PATENTSCHRIFT

(11) **EP 0 560 793 B1**
(45) Veröffentlichungstag und Bekanntmachung des Hinweises auf die Patenterteilung: **03.05.1995**
(21) Anmeldenummer: 91919419.1
(22) Anmeldetag: 12.11.1991
(51) Int. Cl.: G01M 15/00

(54) **VERFAHREN ZUM ERKENNEN VON IRREGULÄREN VERBRENNUNGEN IN EINEM ZYLINDER EINER BRENNKRAFTMASCHINE**
METHOD OF DETECTING IRREGULAR COMBUSTION IN AN ENGINE CYLINDER
PROCEDE POUR LA DETECTION DE COMBUSTIONS IRREGULIERES DANS UN CYLINDRE D'UN MOTEUR A COMBUSTION INTERNE

(30) Priorität: 03.12.1990 DE 9012313 U
(43) Veröffentlichungstag der Anmeldung: 22.09.1993
(73) Patentinhaber: SIEMENS AKTIENGESELLSCHAFT, 80333 München (DE)
(72) Erfinder: ANGERMEIER, Anton, D-8300 Landshut (DE); WIER, Manfred Dr., D-8411 Wenzenbach (DE)
(86) Internationale Anmeldenummer: EP9102140
(87) Internationale Veröffentlichungsnummer: WO9209874

(56) Entgegenhaltungen:
- FR-A- 2 301 691

## Beschreibung

### Verfahren zum Erkennen von irregulären Verbrennungen in einem Zylinder einer Brennkraftmaschine

Die Erfindung betrifft ein Verfahren zum Erkennen von irregulären Verbrennungen in einem Zylinder einer Brennkraftmaschine gemäß Oberbegriff von Anspruch 1.

Aus der US-PS 4 697 561 ist ein Verfahren bekannt, bei dem die Drehzahlen für jeden Zylinder während seines Arbeitstakts an den Kurbelwellenstellungen erfaßt werden, an denen die Kurbelwelle die kleinste bzw. größte Geschwindigkeit hat. Die Differenz zwischen diesen beiden Drehzahlen ist ein Maß für das vom Zylinder erzeugte Drehmoment. Bezogen auf das gemittelte Drehmoment aller Zylinder ergibt sich daraus eine Angabe über die Leistungsfähigkeit des betrachteten Zylinders, die zu Diagnosezwecken herangezogen wird.

Die Kurbelwellenstellungen mit der kleinsten und größten Kurbelwellengeschwindigkeit müssen bei diesem Verfahren experimentell am Motorenprüfstand bestimmt werden. Sie sind insbesondere last- und drehzahlabhängig und werden in dieser Abhängigkeit in dem Steuergerät zur Durchführung des Verfahrens abgespeichert. Diese Kurbelwellenstellungen müssen vor jeder Drehzahlerfassung ausgelesen werden. Dies bedeutet bei der ohnehin zeitkritischen Drehzahlerfassung einen erhöhten Rechenzeitaufwand.

Die FR-A-2 301 691 beschreibt ein Verfahren zur Gewinnung einer, die Annäherung an eine vorgegebene Magerlaufgrenze angebende, Meßgröße beim Betrieb einer Brennkraftmaschine.

Dazu wird ein Verfahren und eine Vorrichtung beschrieben mit der Verbrennungsaussetzer erkannt werden sollen. Dazu wird während des Arbeitshubs eines Zylinders die Kurbelwellenumdrehungsgeschwindigkeit gemessen zu zwei Zeitpunkten, wobei der eine Zeitpunkt vor dem oberen Totpunkt der Verbrennung liegt, der andere nach dem oberen Totpunkt. Es wird die Differenz der Meßwerte gebildet. Beim nächsten Arbeitszyklus desselben Zylinders werden diese beiden Messungen wieder vorgenommen. Aus den beiden ermittelten Differenzen wird wiederum eine Differenz gebildet und bei Änderungen dieser aufeinanderfolgend ermittelten Differenzen wird ein Verbrennungsaussetzer erkannt.

Aufgabe der vorliegenden Erfindung ist es ein vereinfachtes Verfahren zur Verbrennungsaussetzererkennung zu beschreiben, bei dem auch der Rechenzeitaufwand vermindert ist.

Die erfindungsgemäße Lösung ist in Anspruch 1 gekennzeichnet. Vorteilhafte Weiterbildungen der Erfindung finden sich in den Unteransprüchen.

Gemäß der Erfindung wird die Drehzahl für jeden Zylinder an zwei Kurbelwellenstellungen erfaßt, wobei mindestens eine oder beide Kurbelwellenstellungen nach dem oberen Totpunkt liegt. An diesen Kurbelwellenstellungen muß ein auswertbarer Drehzahlunterschied vorliegen, ansonsten sind die Stellungen beliebig wählbar.

Bei einer ordnungsgemäßen Verbrennung in einem Zylinder muß eine gewisse Beschleunigung der Kurbelwelle auftreten. Tritt diese nicht auf, oder unterschreitet sie ein bestimmtes Maß, so hat entweder gar keine Verbrennung stattgefunden oder eine unzureichende Verbrennung.

Erfindungsgemäß wird daher aus den beiden erfaßten Drehzahlen eine Drehzahlsteigung ermittelt. Diese Drehzahlsteigung wird mit einem Grenzwert verglichen. Übersteigt sie den Grenzwert, so liegt eine ordnungsgemäße Verbrennung vor. Unterschreitet sie dagegen den Grenzwert, so liegt gar keine oder eine unzureichende Verbrennung vor.

Bedingt durch die Auswertung über die Drehzahlsteigung müssen die Kurbelwellenstellungen, an denen die Drehzahl erfaßt wird nicht last- und drehzahlabhängig verschoben werden. Sie können unabhängig von den Betriebsbedingungen fest gewählt werden, da eine Drehzahlsteigung im Unterschied zu einer Drehzahldifferenz selbst bei sehr kleinen Unterschieden noch eine Trendaussage zuläßt.

Gemäß einer Weiterbildung der Erfindung kann die Drehzahl während zwei Kurbelwellenstellungsbereichen erfaßt werden. Aus diesen beiden Kurbelwellenstellungsbereichen wird dann jeweils durch Mittelung eine der beiden Drehzahlen gewonnen. Die Drehzahlerfassung ist damit unempfindlicher gegenüber Störeinflüssen.

Die Erfindung wird anhand der Figuren näher erläutert.
Dabei zeigen:
- Figur 1: ein vereinfachtes Blockschaltbild einer Anordnung zur Durchführung des Verfahren,
- Figur 2: einen Geschwindigkeitsverlauf der Kurbelwelle einer Brennkraftmaschine zur Veranschaulichung des Verfahrens und
- Figur 3: ein Flußdiagramm zur Durchführung des Verfahrens.

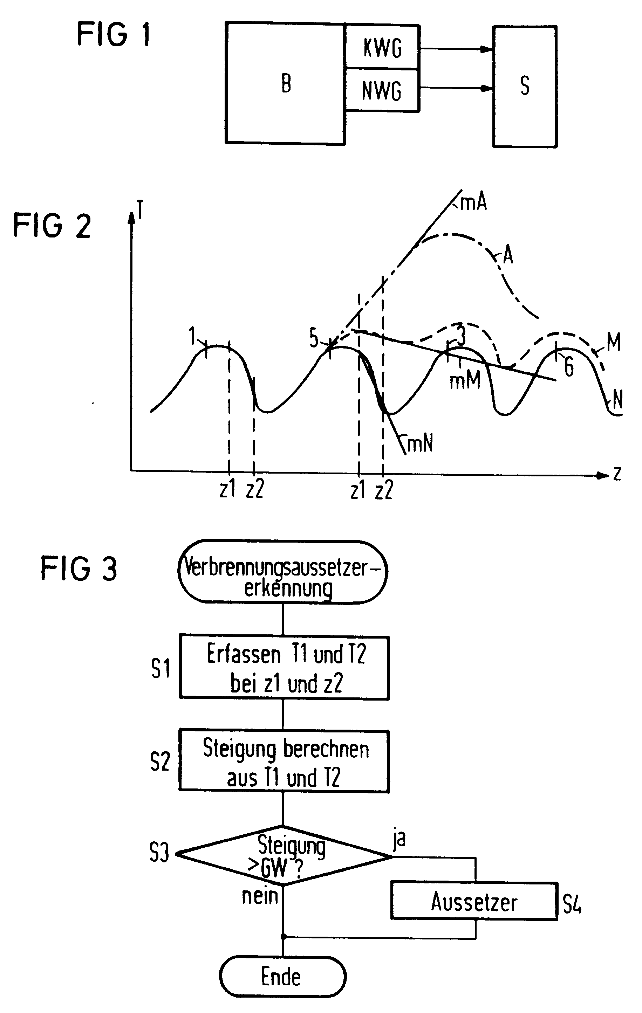

Figur 1 zeigt eine Brennkraftmaschine B mit einem Kurbelwellengeber KWG und einem Nockenwellengeber NWG. Der Kurbelwellengeber tastet ein mit der Kurbelwelle verbundenes Zahnrad ab, das eine Bezugsmarke sowie eine Vielzahl von Zähnen aufweist. Als Ausgangssignal liefert der Kurbelwellengeber KWG jeweils einen Impuls pro Zahn sowie einen davon unterscheidbaren Bezugsimpuls bei der Bezugsmarke. Dieses Ausgangssignal wird einem Steuergerät S zugeleitet, das durch Zählen der Impulse einerseits die Stellung der Kurbelwelle innerhalb einer 360° Drehung bestimmt und andererseits durch die zeitliche Abfolge der Impulse die Drehzahl ermittelt.

Der Nockenwellengeber NWG tastet ein mit der Nockenwelle verbundenes Zahnrad ab, das über die eine Hälfte seines Umfangs einen Zahn und über die andere Hälfte seines Umfangs eine Lücke aufweist. Das Ausgangssignal des Nockenwellengebers NWG hat zwei Zustände, je nachdem ob dem Nockenwellengeber NWG gerade der Zahn oder die Lücke gegenüber steht. Das Steuergerät S bestimmt mit diesem Ausgangssignal zusammen mit dem Ausgangssignal des Kurbelwellengebers KWG die Zylinderzuordnung und den Kurbelwellenwinkel. Der Nockenwellengeber NWG wird gebraucht, da z.B. bei einem 6-Zylinder-Motor eine Periodizität von jeweils zwei Umdrehungen vorliegt und daher die Stellung der Kurbelwelle alleine noch nicht für eine eindeutige Zuordnung in Zündreihenfolge ausreicht.

Das Steuergerät S hat im wesentlichen die Aufgabe die Zündung und Einspritzung für die Brennkraftmaschine B zu steuern sowie diverse Diagnosefunktionen zu übernehmen. Dazu sind an dem Steuergerät S verschiedene hier nicht dargestellte Sensoren und Aktoren angeschlossen. Ein solches Steuergerät S stellt also eine übliche Motorsteuerung dar, wie sie heutzutage in einer Vielzahl von Fahrzeugen bereits verwirklicht ist.

Eine von dem Steuergerät S ausgeführte Diagnosefunktion ist das Erkennen von irregulären Verbrennungen in einem der Zylinder der Brennkraftmaschine B. Zur Veranschaulichung ist im Diagramm der Figur 2 die reziproke Drehzahl T der Kurbelwelle über der Kurbelwellenstellung z aufgetragen. Die reziproke Drehzahl wurde gewählt, weil ein dementsprechendes Signal in dem Steuergerät S bereits vorliegt. Gegenüber einer Betrachtung der Drehzahl kehren sich damit die Verhältnisse um. Daher bedeutet also eine ansteigende Flanke eine Verlangsamung und eine abfallende Flanke eine Beschleunigung der Kurbelwelle. Eine Normalkurve N gibt diesen Verlauf für den normalen Betrieb der Brennkraftmaschien B wieder. Der sinusartige Verlauf resultiert aus den verschiedenen Arbeitstakten der Brennkraftmaschine B, wobei die einzelnen Beschleunigungsphasen jeweils nach der Zündung eines Zylinders während seines Arbeitstakts liegen. In Figur 2 sind beispielhaft gemäß der Zündfolge bei einem 6-Zylinder-Motor die oberen Totpunkte in den Zylindern 1,5, 3, 6 eingezeichnet.

Die Verhältnisse die auftreten, wenn beim Arbeitstakt eines Zylinders keine ordnungsgemäße Zündung und Verbrennung des Gemischs stattfinden sind in Figur 2 für den Zylinder 5 dargestellt. Eine Aussetzerkurve A gilt für den Fall, daß überhaupt keine Verbrennung stattfindet. Die Kurbelwelle wird demgemäß nicht beschleunigt, sondern durch die Widerstände der Maschine weiter verlangsamt. Erst nach der Zündung des nächstfolgenden Zylinders 3 mit einer ordnungsgemäßen Verbrennung wird die Kurbelwelle dann wieder beschleunigt.

Eine Mangelkurve M gilt für den Fall, daß zwar eine Verbrennung stattfindet, diese aber nicht die erforderliche Intensität hat. Die dadurch erfolgte Beschleunigung der Kurbelwelle kann daher die laufende Verzögerung nur vermindern oder nur eine kleine, nicht ausreichende Beschleunigung bewirken. Die in Figur 2 eingezeichnete Mangelkurve M ist daher nur ein Beispiel einer solchen irregulären Verbrennung. Jeder andere Verlauf zwischen der Aussetzerkurve A und der Normalkurve N ist möglich.

Das erfindungsgemäße Verfahren zum Erkennen solcher irregulären Verbrennungen wird anhand des Flußdiagramms der Figur 3 beschrieben. Ein entsprechendes Programm ist in einer Diagnoseroutine des Steuergerätes S abgelegt und wird laufend für jeden Zylinder durchgeführt.

Bezogen auf den jeweiligen oberen Totpunkt eines Zylinders werden dazu zwei Kurbelwellenstellungen z1, z2 festgelegt. Diese Kurbelwellenstellungen z1, z2 liegen im Beispiel nach dem oberen Totpunkt, innerhalb der durch die Verbrennung bewirkten Be schleunigungsphase. Die Kurbelwellenstellungen z1, z2 sind durch Versuche ermittelt. Der hauptsächliche Anhaltspunkt für deren Bestimmung ist ein möglichst gut auswertbarer Unterschied der reziproken Drehzahl T in den beiden Kurbelwellenstellungen z1, z2. Im Schritt S2 wird dann aus diesen beiden reziproken Drehzahlen T1 und T2 die Steigung berechnet. Diese Steigungen sind in Figur 2 durch die Geraden mN, mA und mM veranschaulicht. Im Schritt S3 wird schließlich geprüft, ob diese Steigung größer einem Grenzwert GW ist. Ist dies der Fall, wird im Schritt 54 ein Aussetzer erkannt.

Die Wahl des Grenzwerts GW legt dabei fest, in wieweit nur leicht irreguläre Verbrennungen noch erkennbar sein sollen. Eine besonders einfache Methode ist eine reine Vorzeichenbewertung der Steigung. Am Beispiel der Figur 2 erkennt man, daß im Falle der Aussetzerkurve A eine positive Steigung und im Falle der Normalkurve N eine negative Steigung vorliegt.

Wünscht man eine genauere Auswertung auch nur leicht irregulärer Verbrennungen wird der Grenzwert GW auf einen bestimmten negativen Wert gesetzt. Damit werden auch noch Verbrennungen als irregulär erkannt, die zwar einen Beschleunigungsbeitrag liefern, der aber gegenüber den Verhältnissen bei der Normalkurve N unzureichend ist. Dieser Grenzwert GW wird wiederum durch Versuche bestimmt.

Das beschriebene Verfahren reicht in der Regel aus, um genügend genau irreguläre Verbrennungen zu erkennen. Liegen jedoch größere Störeinflüsse bei der Signalauswertung vor, so kann das Verfahren durch verschiedene Möglichkeiten verfeinert werden.

Eine solche Möglichkeit besteht darin, statt der reziproken Drehzahl T1 an der Kurbelwellenstellung z1 und der reziproken Drehzahl T2 an der Kurbelwellenstellung z2 jeweils eine Mehrzahl von reziproken Drehzahlen T zu bestimmen und daraus durch Mittelwertbildung die reziproken Drehzahlen T1 und T2 zu ermitteln. Etwaige Störeinflüsse bei der Erfasssung der reziproken Drehzahlen T1, T2 werden dadurch ausgeglichen.

Durch Schwingungen, Resonanzen etc. kann in bestimmten Last- und Drehzahlbereichen die Normalkurve N verformt sein. Durch eine entsprechende last- und drehzahlabhängige Veränderung des Grenzwerts GW kann dem begegnet werden. Eine weitere Möglichkeit dazu wäre den Abstand der Kurbelwellenstellungen z1, z2 zueinander und bezogen auf den oberen Totpunkt zu verändern.

## Patentansprüche

1. Verfahren zur Erkennung von irregulären Verbrennungen in einem Zylinder einer Brennkraftmaschine (B), wobei die Drehzahl der Brennkraftmaschine für jeden Zylinder an zwei Kurbelwellenstellungen ermittelt wird, wobei mindestens eine der Kurbelwellenstellungen (z1, z2) nach dem jeweiligen oberen Totpunkt liegt, wobei aus den beiden ermittelten Drehzahlen jeweils eine Steigung des Drehzahlverlaufs, der durch die beiden ermittelten Drehzahlen bestimmt ist, ermittelt wird,
**dadurch gekennzeichnet,**
daß eine irreguläre Verbrennung erkannt wird, wenn die Drehzahlsteigung einen Grenzwert (GW) unterschreitet.

2. Verfahren nach Anspruch 1
**dadurch gekennzeichnet,**
daß die Drehzahl für jeden Zylinder laufend während zwei Kurbelwellenstellungsbereichen ermittelt und anschließend gemittelt wird und die gemittelten Drehzahlen dann zur Ermittlung der Steigung des Drehzahlverlaufs herangezogen werden.

3. Verfahren nach Anspruch 1,
**dadurch gekennzeichnet**,
daß der Grenzwert GW Null ist und dessen Unterschreitung aus dem Vorzeichen der Drehzalsteigung erkannt wird.

4. Verfahren nach Anspruch 1,
**dadurch gekennzeichnet**,
daß der Grenzwert (GW) abhängig von der Last und Drehzahl der Brennkraftmaschine (B) verändert wird.

5. Verfahren nach Anspruch 1,
**dadurch gekennzeichnet,**
daß der Abstand der Kurbelwellenstellungen (z1, z2) zueinander bzw. zum oberen Totpunkt last- und drehzahlabhängig variiert wird.

## Claims

1. Process for recognizing irregular combustions in a cylinder of an internal-combustion engine (B), the rotational speed of the internal-combustion engine being determined for each cylinder at two crankshaft positions, at least one of the crankshaft positions (z1, z2) being located after the respective top dead centre, a gradient of the rotational-speed trend, which is determined by the two rotational speeds obtained, being respectively determined from the two rotational speeds obtained, characterized in that an irregular combustion is recognized when the rotational-speed gradient falls below a limit value (GW).

2. Process according to Claim 1, characterized in that the rotational speed for each cylinder is determined continuously over two crankshaft-position ranges and is subsequently averaged, and the average rotational speeds are then used for determining the gradient of the rotational-speed trend.

3. Process according to Claim 1, characterized in that the limit value GW is zero and its falling below is recognized from the sign of the rotational-speed gradient.

4. Process according to Claim 1, characterized in that the limit value (GW) is varied in dependence on the load and rotational speed of the internal-combustion engine (B).

5. Process according to Claim 1, characterized in that the distance of the crankshaft positions (z1, z2) from one another and from the top dead centre is varied in dependence on load and on rotational speed.

## Revendications

1. Procédé d'identification de combustions irrégulières dans un cylindre d'un moteur à combustion interne (B), la vitesse de rotation du moteur à combustion interne étant déterminée pour chaque cylindre pour deux positions du vilebrequin, au moins l'une des positions (z1,z2) du vilebrequin étant au-delà du point mort haut respectif, et une pente de la courbe de la vitesse de rotation, qui est définie par les deux vitesses de rotation déterminées, étant déterminée à partir des deux vitesses de rotation déterminées, caractérisé par le fait que l'on identifie une combustion irrégulière lorsque la pente de la vitesse de rotation passe sous une valeur limite (GW).

2. Procédé suivant la revendication 1, caractérisé par le fait que l'on détermine la vitesse de rotation pour chaque cylindre en permanence pendant deux gammes de positions du vilebrequin, puis on forme la moyenne de cette vitesse de rotation et on utilise ensuite les vitesses de rotation moyennes pour déterminer la pente de la courbe de la vitesse de rotation.

3. Procédé suivant la revendication 1, caractérisé par le fait que la valeur limite (GW) est nulle et on identifie le passage sous cette valeur limite par le signe de la pente de la courbe de la vitesse de rotation.

4. Procédé suivant la revendication 1, caractérisé par le fait que l'on modifie la valeur limite (GW) en fonction de la charge et de la vitesse de rotation du moteur à combustion interne (B).

5. Procédé suivant la revendication 1, caractérisé par le fait que l'on fait varier l'écart entre les positions (z1,z2) du vilebrequin l'une par rapport à l'autre ou par rapport au point mort haut en fonction de la charge et de la vitesse de rotation.
